# NEUE EUROPÄISCHE PATENTSCHRIFT

(11) **EP 0 948 126 B2**
(45) Veröffentlichungstag und Bekanntmachung des Hinweises auf die Entscheidung über den Einspruch: **09.09.2009**
(45) Hinweis auf die Patenterteilung: 12.05.2004
(21) Anmeldenummer: 99105537.7
(22) Anmeldetag: 18.03.1999
(51) Int. Cl.: H02P 25/04

(54) **Verfahren zur Erfassung eines Parameters eines Asynchronmotors**
Device for detecting parameter of an asynchronous motor
Dispositif de détection de paramètre d'un moteur asynchrone

(30) Priorität: 04.04.1998 DE 19815232
(43) Veröffentlichungstag der Anmeldung: 06.10.1999
(73) Patentinhaber: GRUNDFOS A/S, DK-8850 Bjerringbro (DK)
(72) Erfinder: Jensen, Niels Due, 8850 Bjerringbro (DK); Tolstrup, Jesper, 8860 Silkeborg (DK)
(74) Vertreter: Vollmann, Heiko

(56) Entgegenhaltungen:
- EP-A1- 0 629 037
- DE-A- 3 607 162
- DE-A- 3 628 284
- DE-A- 4 337 614
- DE-A1- 4 031 708
- FR-A- 2 749 714
- US-A- 4 547 720
- US-A- 4 853 605
- PATENT ABSTRACTS OF JAPAN vol. 011, no. 169 (E-511), 30. Mai 1987 (1987-05-30) & JP 62 002887 A (TOSHIBA CORP), 8. Januar 1987 (1987-01-08)

## Beschreibung

Die Erfindung betrifft ein Verfahren zur Erfassen mindestens eines Parameters des Belastungszustandes eines wechselstromgespeisten Asynchronmotors mit den im Oberbegriff des Anspruchs 1 angegebenen Merkmalen.

Wechselstromgespeiste Asynchronmotoren werden beispielsweise zum Antrieb von Kreiselpumpen eingesetzt, und zwar insbesondere im Bereich kleiner und mittlerer Leistungen. Die Asynchronmotoren derartiger Pumpenaggregateweisen heutzutage typischerweise eine Hauptwicklung und drei Hilfswicklungen auf, die je nach gewünschter Drehzahl des Motors in Reihe oder parallel zu Hilfswicklung schaltbar sind. Die Schaltung erfolgt dabei über elektronische Schalter, die es ermöglichen, durch schnelles Umschalten auch Zwischendrehzahlen zu erzeugen. Es sei in diesem Zusammenhang insbesondere auf DE 36 07 162 C2 sowie DE 42 22 431 A1 verwiesen, wo die Erzeugung einer Vielzahl unterschiedlicher Drehzahlen bei derartigen wechselstromgespeisten Asynchronmotoren im einzelnen beschrieben ist.

Durch diese feinstufige Steuerungsmöglichkeit der Drehzahl können derartige Motoren in Regelungen eingebunden werden. Eine derartige Anwendung ist beispielsweise im Bereich der Heizungsumwälzpumpen bekannt, um die Pumpe energetisch günstig zu fahren, d. h. nur soviel Wasser umzuwälzen, wie es für den jeweiligen Wärmebedarf erforderlich ist. Da Asynchronmotoren je nach Belastung unterschiedlichen Schlupf haben, d. h. die tatsächliche Drehzahl des Motors nicht mit der Nenndrehzahl, die sich ohne Belastung des Motors ergibt, übereinstimmt, ist es bei derartigen Anwendungen regelmäßig erforderlich, die tatsächliche Drehzahl des Motors mit hinreichender Genauigkeit zu erfassen. Anhand der Drehzahl kann nämlich der Betriebspunkt der Pumpe bestimmt werden, wenn zuvor die drehzahlabhängigen Drosselkurven erfaßt worden sind. Es wird in diesem Zusammenhang nur beispielhaft auf DE 32 25 141 C2 verwiesen, wo diese an sich bekannten Zusammenhänge im einzelnen erläutert sind.

Die Drehzahlerfassung des Motors kann durch eine externe Meßeinrichtung erfolgen, wobei in der Regel ein mit der Welle des Motors umlaufender Gegenstand einem feststehenden Meßaufnehmer zugeordnet ist, der das Vorbeiführen des Gegenstandes beim Drehen der Motorwelle erfaßt. Derartige Meßeinrichtungen können optisch, induktiv magnetisch, elektrisch oder in anderer Weise gebildet sein. Sie haben den Nachteil, daß sie zum einen kostenaufwendig sind und zum anderen die Baugröße des Aggregates in Folge der externen Meßeinrichtung vergrößern. Darüber hinaus sind sie häufig störanfällig und daher für den Einsatz bei wechselstromgespeisten Asynchronmotoren, die meist in Großserie hergestellt werden, wenig geeignet. Durchgesetzt hat sich daher heutzutage die Drehzahlerfassung durch induktive Messung, wobei hierzu im Stator eine gesonderte Meßwicklung einzugliedem ist. Das Einlegen einer solchen Meßwicklung erfordert mindestens einen zusätzlichen Fertigungsschritt und kann darüber hinaus den Wirkungsgrad des Motors verschlechtern.

Zwar ist es bekannt, bei wechselstromgespeisten Asynchronmotoren den Lastzustand des Motors durch Ermittlung des Kosinus-ϕ, d. h. der Phasenverschiebung zwischen Strom und Spannung an den Anschlußklemmen zu überwachen. Dabei verschiebt sich die Phase des Stromes gegenüber der als konstant anzusehenden Phase der Spannung. Eine solche Überwachung ist jedoch nicht möglich bei vergleichsweise weichen Asynchronmotoren, wie sie beispielsweise in Kreiselpumpenaggregaten eingesetzt werden, da sich der Kosinus-ϕ bei diesen Motoren belastungsabhängig kaum ändert, zumindest nicht so eindeutig, daß daraus Rückschlüsse auf den Belastungszustand möglich sind.

Aus US-A-4853605 ist es bekannt, den Lastzustand des Motors durch Ermittlung der Phasenverschiebung zwischen der belastungsunabhängigen Versorgungsspannung und eines belastungsabhängigen Wicklungsstromes, nämlich dem der Hauptwicklung zu erfassen. Auch dieses Verfahren findet findet dort seine Grenzen, wo vergleichsweise weiche Asynchronmotoren, wie sie typischerweise in Kreiselpumpenaggregaten eingesetzt werden, überwacht werden sollen, da aufgrund der nur geringen belastungsabhöngigen Änderungen des Kosinus-ϕ keine eindeutigen Rückschlüsse auf den Belastungszustand des Motors gezogen werden können. Darüber hinaus wäre die Erfassung dieser nur geringen Änderung messtechnisch mit erheblichem Aufwand verbunden.

Hiervon ausgehend liegt der vorliegenden Erfindung die Aufgabe zugrunde, ein gattungsgemäßes Verfahren zur Erfassung mindestens eines Parameters des Belastungszustandes eines wechselstromgespeisten Asynchronmotors, insbesondere der Drehzahl, zu schaffen, das mit konstruktiv geringem Aufwand durchführbar ist und insbesondere die vorerwähnten Nachteile vermeidet.

Diese Aufgabe wird gemäß der Erfindung durch die in Anspruch 1 angegebenen Merkmale gelöst. Vorteilhafte Ausgestaltungen des Verfahrens sowie eine entsprechende vorrichtungsmäßige Ausbildung sind in den Unteransprüchen sowie dem Nebenanspruch angegeben.

Grundgedanke der vorliegenden Erfindung ist es, einen den Belastungszustand des Motors kennzeichnenden Parameter ausschließlich anhand elektrischer Größen zu erfassen, also ohne weitere Vorkehrungen am Motor treffen zu müssen. Dabei wird die Phasenverschiebung zwischen mindestens zwei elektrischen Größen am Motor bestimmt, die in der Phasenlage belastungsabhängig sind, die sich also beide in ihrer Phasenlage lastabhängig verändern. Die elektrischen Größen sind dabei gemäß der Erfindung so gewählt, dass sich die Phasenverschiebungen über das Belastungsspektrum des Motors gegenläufig ändern, da dann bei vergleichsweise geringer Meßgenauigkeit der gewünschte Belastungsparameter, insbesondere die Drehzahl einfach, genau und zuverlässig bestimmen lösst.

Die Messung erfolgt dabei zweckmäßigerweise zwischen den Größen am Motor, welche eine möglichst eindeutige und über den gesamten Drehzahlbereich gut differenzierbare Drehzahlzuordnung ermöglichen. Dies kann experimentell recht einfach ermittelt werden, andererseits sind in den Unteransprüchen und der nachfolgenden Beschreibung gerade die elektrischen Größen des Motors angegeben, anhand derer die Phasenverschiebung zweckmäßigerweise bestimmt wird. Diese Größen sind so gewählt, dass sich eine möglichst große Änderung der Phasenverschiebung über den gesamten Drehzahlbereich des Motors ergibt.

Meßtechnisch besonders günstig ist es, wenn die Phasenverschiebung durch Zeitmessung zwischen den Nulldurchgängen der jeweiligen elektrischen Größen ermittelt wird, da zum einen die Nulldurchgänge einfach zu erfassen sind und zum anderen beispielsweise der Nulldurchgang des durch die Hauptwicklung fließenden Stromes üblicherweise ohnehin überwacht wird, da die elektronischen Schalter, die Teile der Hilfswicklung in Reihe oder parallel zur Hauptwicklung schalten, stets im Nulldurchgang des Stromes geschaltet werden. So kann auch bei der Messung zumindest einer elektrischen Größe, nämlich des durch die Hauptwicklung fließenden Stromes der gegebenenfalls ohnehin vorhandene Meßwiderstand genutzt werden. Es sind also auch insoweit keine zusätzlichen elektronischen Vorkehrungen zu treffen.

Die Auswertung des Meßergebnisses und Zuordnung eines Belastungsparameters, insbesondere der entsprechenden Drehzahl kann durch entsprechende Programmierung des vorhandenen oder gegebenenfalls vorzusehenden Mikroprozessors erfolgen.

Für die Messung besonders aussagekräftig und damit vorteilhaft ist die Ermittlung der Phasenverschiebung zwischen folgenden elektrischen Größen:
a) Spannung einer in Reihe zur Hauptwicklung geschalteten Hilfswicklung und Strom derselben;
b) Spannung einer in Reihe zur Hauptwicklung geschalteten Hilfswicklung und Spannung an einer parallel geschalteten Hilfswicklung;
c) Spannung einer in Reihe zur Hauptwicklung geschalteten Hilfswicklung und Spannung an der Hauptwicklung;
d) Spannung einer in Reihe zur Hauptwicklung geschalteten Hilfswicklung und Strom in der Hauptwicklung;
e) Spannung einer in Reihe zur Hauptwicklung geschalteten Hilfswicklung und Spannung am Betriebskondensator;
f) Spannung einer in Reihe zur Hauptwicklung geschalteten Hilfswicklung und Strom am Betriebskondensator;
g) Spannung an einer parallel zur Hauptwicklung geschalteten Hilfswicklung und Strom in der Hauptwicklung.

Bei Wahl der vorerwähnten elektrischen Größen ergeben sich Zeitunterschiede in der Phasenverschiebung über den Drehzahlbereich des Motors, die beispielsweise deutlich über einer Millisekunde liegen und daher meßtechnisch sehr gut erfaßbar sind.

Die Figuren zeigen:
- Fig. 1: das Schaltbild eines Wechselstromasynchronmotors,
- Fig. 2: die sich ergebende Phasenverschiebung eines Wechselstromasynchronmotors zwischen dem durch die Hauptwicklung fließenden Strom und der an den Anschlußklemmen anliegenden Spannung im Vergleich zum Kosinus-ϕ jeweils in Abhängigkeit zum reziproken Wert der Drehzahl,
- Fig. 3: die Phasenverschiebung in Abhängigkeit vom Förderstrom eines Kreiselpumpenaggregats, das mittels eines Elektromotors gemäß Fig. 1 angetrieben ist in vier Grundschaltstellungen sowie diversen Zwischenschaltstellungen und
- Fig. 4: das HQ-Diagramm eines solchen Pumpenaggregats unter Zugrundelegung der vier Grundschaltstellungen sowie der Zwischenschaltstellungen gemäß Fig. 3.

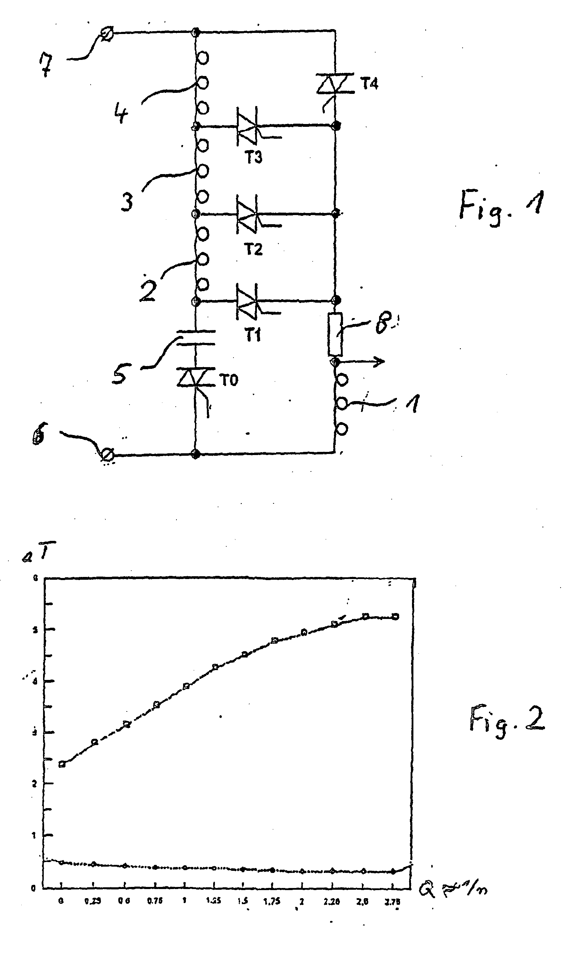

Der anhand von Fig. 1 dargestellte wechselstromgespeiste Asynchronmotor weist eine Hauptwicklung 1 sowie drei Hilfswicklungen 2, 3 und 4 auf, die über Schalter T1 bis T4 wahlweise in Reihe oder parallel zur Hauptwicklung 1 schaltbar sind. Weiterhin weist der Motor einen parallel zur Hauptwicklung 1 geschalteten Betriebskondensator 5 auf sowie einen mit diesem in Reihe geschalteten Schalter T0. Die elektronischen Schalter T0 bis T4 sind Triacs, es können jedoch geeignete andere elektronische Schalter eingesetzt werden. Mit Hilfe der Schalter T1 bis T4 kann der Motor in vier verschiedenen Grundkonfigurationen betrieben werden, entsprechend derer sich vier unterschiedliche Nenndrehzahlen ergeben. Diese Nenndrehzahlen weichen je nach Belastungszustand von den tatsächlichen Drehzahlen ab. Bei dem anhand von Fig. 1 dargestellten Motor ergeben sich die nachfolgenden mit absteigender Nenndrehzahl aufgeführten Schaltstellungen:

| **Speed** | **T0** | **T1** | **T2** | **T3** | **T4** |
|---|---|---|---|---|---|
| *High Speed* | 1 | 0 | 0 | 0 | 1 |
| | 1 | 0 | 0 | 1 | 0 |
| | 1 | 0 | 1 | 0 | 0 |
| *Low Speed* | 1 | 1 | 0 | 0 | 0 |
| *0 = Schalter geöffnet* | | | | | |
| *1 = Schalter geschlossen* | | | | | |

An den Klemmen 6 und 7 liegt die Versorgungsspannung an. In Reihe zur Hauptwicklung 1 ist ein Meßwiderstand 8 geschaltet, der zur Strommessung in der Hauptwicklung vorgesehen ist, wobei nicht die Amplitude des Stromverlaufes ermittelt wird, sondern lediglich Zeitpunkt des Nulldurchgangs, da nur während des Nulldurchgangs die Schalter T1 bis T4 lastfrei geschaltet werden können.

Bei dieser Schaltungsanordnung wird zur Ermittlung des Lastzustandes des Motors, beispielsweise zur Bestimmung der Drehzahl des Motors eine Phasenverschiebung zwischen zwei geeigneten Größen am Motor gemessen. Bei der oberen Kurve gemäß Fig. 2 ist die sich in Abhängigkeit von der reziproken Drehzahl ergebende Phasenverschiebung dargestellt, die sich ergibt, wenn man die Spannung zwischen den Anschlußklemmen 6 und 7 einerseits mit dem durch die Hauptwicklung 1 fließenden Strom vergleicht, und zwar bei einer der weiter oben aufgeführten vier Grundschaltstellungen des Motors. Wie anhand dieser in Fig. 2 oberen Kurve deutlich wird, kann anhand dieses Verlaufs der Phasenverschiebung jeder Phasenverschiebung ein reziproker Wert der Drehzahl bzw. eine Drehzahl zugeordnet werden. Wenn diese Kurve also einmal ermittelt ist, kann nur durch Bestimmung der Phasenverschiebung die tatsächliche Drehzahl in der jeweiligen Schaltstellung ermittelt werden. Es ist also eine eindeutige Zuordnung zwischen Phasenverschiebung und Drehzahl gegeben.

Um eine möglichst eindeutige und aussagekräftige Zuordnung zu erhalten, ist es wesentlich, die Phasenverschiebung zwischen geeigneten Größen am Motor zu messen. In der Darstellung gemäß Fig. 2 ist nur beispielhaft eine untere Kurve dargestellt, bei der eine solche Zuordnung nicht oder zumindest so gegeben ist, daß sie meßtechnisch nicht oder nur schwer erfaßbar ist. Bei der in Fig. 2 dargestellten unteren Kurve handelt es sich um den Kosinus-ϕ, d. h. die Phasenverschiebung zwischen Strom und Spannung an den Anschlußklemmen 6, 7 des Motors im Betrieb. Besonders geeignet zur Messung der Phasenverschiebung ist die Spannung an einer oder mehrerer parallel zur Hauptwicklung 8 geschalteter Hilfswicklungen und der Strom, der durch den Betriebskondensator 5 fließt, oder durch die Hauptwicklung 1 fließt, oder der durch eine in Reihe zur Hauptwicklung 1 geschalteten Hilfswicklung 2, 3 oder 4 fließt. Weiterhin als zweckmäßig erwiesen hat es sich, die Phasenverschiebung zwischen der Spannung einer oder mehrerer in Reihe mit der Hauptwicklung 1 geschalteter Hilfswicklungen 2, 3, 4 und der Spannung am Betriebskondensator 5, der Spannung an der Hauptwicklung 1 oder der Spannung an einer parallel zur Hauptwicklung 1 geschalteten Hilfswicklung 2 zu ermitteln. Darüber hinaus hat sich als zweckmäßig erwiesen, die Phasenverschiebung zwischen einer oder mehrerer parallel zur Hauptwicklung 1 geschalteter Hilfswicklungen 2, 3, 4 und dem in der Hauptwicklung 1 fließenden Strom zu messen.

Da bei der Phasenverschiebung zwischen den vorerwähnten elektrischen Größen am Motor entweder mindestens eine der Hilfswicklungen 2, 3, 4 in Serie zur Hauptwicklung 1 oder aber parallel dazu liegen muß, ist es besonders zweckmäßig, die Phasenverschiebung zwischen dem durch die Hauptwicklung 1 fließenden Strom einerseits und der an einer oder mehrerer in Reihe zur Hauptwicklung geschalteter Hilfswicklungen 2, 3, 4 anliegenden Spannung andererseits bzw. der parallel zur Hauptwicklung 1 geschalteten Hilfswicklung 2, 3 oder 4 anliegenden Spannung zu ermitteln.

Die Messung erfolgt zweckmäßigerweise jeweils im Nulldurchgang der einzelnen Größen, wobei die Zeit zwischen den Nulldurchgängen zu ermitteln ist. Die letztgenannte Meßanordnung ist insbesondere auch deshalb von besonderem Vorteil, da dann der ohnehin vorhandene Meßwiderstand 8 und das in der Auswertelektronik darüber ohnehin anstehende Nulldurchgangssignal des Stromes genutzt werden kann, so daß lediglich noch der Nulldurchgang der Spannung an der in Reihe oder parallel zur Hauptwicklung geschalteten Hilfswicklung zu ermitteln ist, um dann den jeweiligen zeitlichen Abstand festzustellen. Die Nulldurchgangsmessung bietet gegenüber der sonst bei Leistungsmessungen üblichen Amplitudenmessungen wesentliche Vorteile, da für die Signalweiterverarbeitung im Zuge der Auswertung, was üblicherweise in einem Mikroprozessor erfolgt, kein aufwendiger Analog-Digitalwandler erforderlich ist, da das an sich analoge Meßsignal mit geringem elektronischen Aufwand direkt in ein digital auswertbares Signal überführbar ist.

Wenn bei der vorerwähnten Meßkonstellation in der High-Speed-Schaltstellung die speziell für diesen Schaltzustand erforderliche Spannungsmessung an einer oder mehrerer parallel zur Hauptwicklung 1 geschalteter Hilfswicklungen 2, 3, 4 vermieden werden soll, dann kann der Motor zu Meßzwecken kurzzeitig, beispielsweise für ein bis drei Netzfrequenzperioden in die darunterliegende Schaltstellung gebracht werden, in der dann wieder eine vergleichsweise exakte Messung möglich ist.

Die vorstehend beschriebenen vier Grundschaltstellungen ergeben eine vergleichsweise grobe Drehzahlabstufung des Motors. Durch zeitliche Variation der Schaltvorgänge können eine Vielzahl von Zwischenschaltstufen erzeugt werden. Dies ist nicht Gegenstand der vorliegenden Anmeldung und wird daher nicht im einzelnen beschrieben. Es wird in diesem Zusammenhang ausdrücklich auf DE 36 07 162 C2 verwiesen.

Wenn man den anhand von Fig. 1 dargestellten Motor zum Antrieb eines Kreiselpumpenaggregats für eine Heizungsanlage einsetzt, dann kann anhand der vorbeschriebenen Phasenverschiebung unmittelbar der aktuelle Förderstrom der Pumpe bestimmt werden, der in gewissen Grenzen bezogen auf die jeweilige Schaltstellung etwa umgekehrt proportional zur Drehzahl des Motors ist. Die in Fig. 2 dargestellte obere Kurve stellt also den Förderstrom der Pumpe in Abhängigkeit von der Phasenverschiebung zwischen zwei elektrischen Größen am Motor dar.

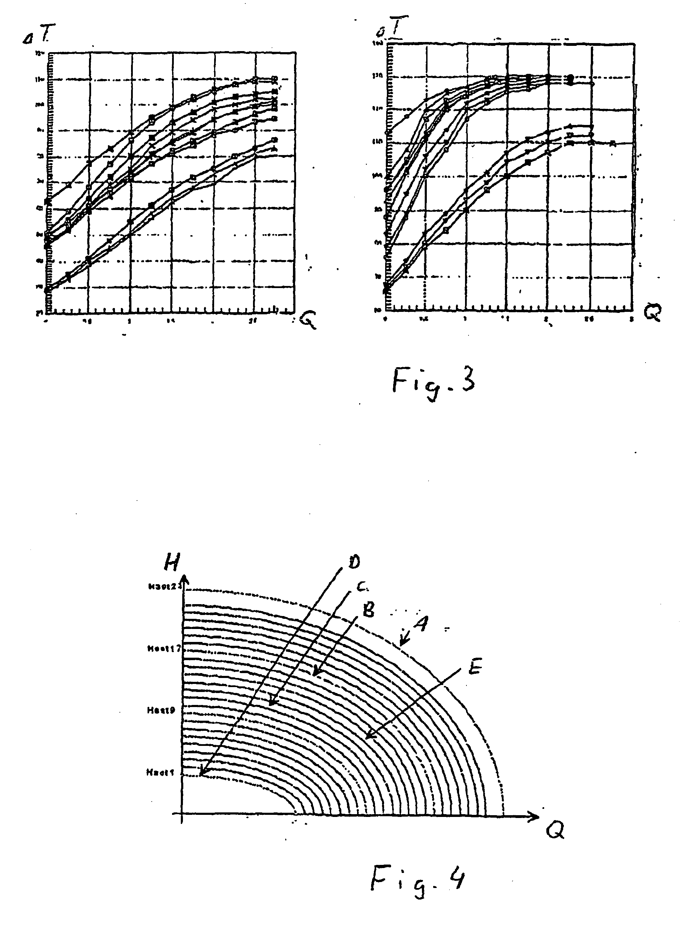

Wenn man nun die Abhängigkeit der Phasenverschiebung zum Förderstrom der Pumpe für jede Grundschaltstellung und die jeweiligen Zwischenschaltstellungen aufträgt, so ergeben sich beispielsweise die aus Fig. 3 ersichtlichen vierundzwanzig Kurvenverläufe (vier Grundschaltstellungen und zwanzig Zwischenschaltstellungen). In Fig. 4 ist das HQ-Diagramm für diese vierundzwanzig Schaltstellungen dargestellt, das sich in bekannter Weise ermitteln läßt. Die in Fig. 4 dargestellten Kurven A, B, C und D betreffen die Grundschaltstellungen, während die beispielhaft mit E gekennzeichnete Kurve eine Zwischenschaltstellung ist. Wenn nun aber das HQ-Diagramm gemäß Fig. 4 für jede Schaltstellung bekannt ist, d. h. der Verlauf von Förderstrom und Förderhöhe bekannt ist und wenn andererseits gemäß den entsprechenden Kurven in Fig. 3 in der entsprechenden Schaltstellung jeder Förderhöhe eine bestimmte Phasenverschiebung zugeordnet ist, so wird deutlich, daß in Kenntnis der Schaltstellung der jeweiligen Pumpe allein durch Messung der Phasenverschiebung der aktuelle Betriebszustand der Pumpe erfaßbar ist, so daß die Pumpe ohne weitere meßtechnische Anordnungen wie beispielsweise Drucksensor oder Durchflußmesser in eine Regelung eingebunden werden kann, wenn die entsprechenden Zuordnungen über einen Mikroprozessor oder andere geeignete, vorzugsweise digitale Auswertelektronik erfolgt. Neben dem geringen meßtechnischen Aufwand bietet dieses Verfahren insbesondere noch den Vorteil, daß praktisch selbsttätig eine Temperaturkompensation erfolgt, so daß die in der Praxis sonst übliche Temperaturkompensation, wie sie beispielsweise bei Differenzdruckmessern regelmäßig erforderlich ist, vollständig entfallen kann und die Meßgrößen selbst bei diesem Verfahren bei geeigneter Taktung auszählbar sind.

### Bezugszeichenliste

- 1 -: Hauptwicklung
- 2, 3, 4 -: Hilfswicklung
- 5 -: Betriebskondensator

- T0, T1, T2, T3, T4 -: Schalter

- 6 -: Klemme
- 7 -: Klemme
- 8 -: Meßwiderstand

- A, B, C, D, E -: Kurven im HQ-Diagramm

## Patentansprüche

1. Verfahren zur Erfassung mindestens eines Parameters des Belastungszustandes eines wechselstromgespeisten Asynchronmotors mit einer Hauptwicklung (1), mit mindestens einer Hilfswicklung (2, 3, 4) und mit mindestens einem Kondensator (5), bei dem der den Belastungszustand kennzeichnende Parameter anhand der Phasenverschiebung zwischen mindestens zwei elektrischen Größen am Motor bestimmt wird, **dadurch gekennzeichnet, daß** der den Belastungszustand kennzeichnende Parameter anhand der Phasenverschiebung zwischen mindestens zwei jeweils in ihrer Phasenlage belastungsabhängigen elektrischen Größen am Motor bestimmt wird, wobei die elektrischen Größen, zwischen denen die Phasenverschiebung ermittelt wird, sich über das Belastungsspektrum in der Phase gegenläufig zueinander verändern.

2. Verfahren nach Anspruch 1, **dadurch gekennzeichnet, daß** die Phasenverschiebung durch Zeitmessung zwischen den Nulldurchgängen der jeweiligen elektrischen Größen ermittelt wird.

3. Verfahren nach einem der vorhergehenden Ansprüche, **dadurch gekennzeichnet, daß** die Phasenverschiebung zwischen der Spannung, die an der oder den der Hauptwicklung (1) vorgeschalteten Hilfswicklungen (2, 3, 4) anliegt, und einer weiteren elektrischen Größe am Motor bestimmt wird.

4. Verfahren nach Anspruch 3, **dadurch gekennzeichnet, daß** die weitere elektrische Größe der durch die Hauptwicklung (1) des Motors fließende Strom ist.

5. Verfahren nach Anspruch 3, **dadurch gekennzeichnet, daß** die weitere elektrische Größe die an einer parallel zur Hauptwicklung (1) geschalteten Hilfswicklung (2, 3, 4) anliegende Spannung ist.

6. Verfahren nach Anspruch 3, **dadurch gekennzeichnet, daß** die weitere elektrische Größe die an der Hauptwicklung (1) anliegende Spannung ist.

7. Verfahren nach Anspruch 3, **dadurch gekennzeichnet, daß** die weitere elektrische Größe der durch die in Reihe zur Hauptwicklung (1) geschaltete Hilfswicklung bzw. geschalteten Hilfswicklungen (2, 3, 4) fließende Strom ist.

8. Verfahren nach Anspruch 3, **dadurch gekennzeichnet, daß** die weitere elektrische Größe der durch den Betriebskondensator (5) fließende Strom ist.

9. Verfahren nach Anspruch 3, **dadurch gekennzeichnet, daß** die weitere elektrische Größe die am Betriebskondensator (5) anliegenden Spannung ist.

10. Verfahren nach einem der vorhergehenden Ansprüche, **dadurch gekennzeichnet, daß** die Phasenverschiebung zwischen einer parallel zur Hauptwicklung (1) geschalteten Hilfswicklung (2, 3, 4) und dem durch die Hauptwicklung fließenden Strom ermittelt wird.

11. Verfahren nach einem der vorhergehenden Ansprüche für einen Asynchronmotor mit mehreren Hilfswicklungen (2, 3, 4), die über elektronische Schalter (T1 bis T4) wahlweise in Reihe oder parallel zur Hauptwicklung (1) schaltbarsind, **dadurch gekennzeichnet, daß** anhand derzur Ermittlung der Phasenverschiebung erfaßten Phasenlage in der Hauptwicklung (1) die Steuerung der elektronischen Schalter (T1 bis T4) erfolgt, derart, daß Schaltvorgänge nur im Nulldurchgang des Stromes der Hauptwicklung (1) erfolgen.

12. Verfahren nach einem dervorhergehenden Ansprüche, **dadurch gekennzeichnet, daß** zur Erfassung mindestens eines Parameters des Belastungszustandes des Motors dann, wenn alle Hilfswicklungen (2, 3, 4) parallel zur Hauptwicklung (1) geschaltet sind, kurzzeitig eine Hilfswicklung (2, 3, 4) zum Zwecke der Messung der Phasenverschiebung in Reihe zur Hauptwicklung (1) geschaltet wird.

13. Verfahren nach Anspruch 12, **dadurch gekennzeichnet, daß** die Schaltdauer zu Meßzwecken zwischen einer halben und fünf Perioden der Netzfrequenz beträgt.

14. Wechselstromasynchronmotor mit einer Hauptwicklung 1, mit mindestens einem Kondensator 5 und mit mindestens einer Hilfswicklung (2, 3, 4), die mittels eines elektronischen Schalters (D1 bis D4) parallel oder in Reihe zur Hauptwicklung (1) schaltbar ist, wobei zur Hauptwicklung (1) ein Messwiderstand (8) zur Erfassung des durch die Hauptwicklung (1) fließenden Stromes in Reihe geschaltet ist, **dadurch gekennzeichnet, dass** eine Einrichtung zur Erfassung der Phasenverschiebung zwischen mindestens zwei belastungsabhängigen und sich über das Belastungsspektrum in der Phase gegenläufig zueinander verändernden elektrischen Größen am Motor vorgesehen ist, wobei der Messwiderstand (8) einen Teil dieser Einrichtung bildet.

15. Wechselstromasynchronmotor nach Anspruch 14, **dadurch gekennzeichnet, dass** er Teil eines mit einer Kreiselpumpe versehenen Heizungsumwälzpumpenaggregats bildet.

## Claims

1. A method for detecting at least one parameter of the load condition of an alternating-current supplied asynchronous motor with a main winding (1), with at least one auxiliary winding (2, 3, 4), and with at least one capacitor (5), with which the parameter characterising the load condition is determined by way of the phase shift between at least two electrical variables at the motor, **characterised in that** the parameter characterising the load condition is determined by way of the phase shift between at least two electrical variables at the motor which in each case are load-dependent in their phase position, wherein the electrical variables between which the phase shift is determined change in phase counter to one another over the load spectrum.

2. A method according to claim 1, **characterised in that** the phase shift is determined by time measurement between the zero crossings of the respective electrical variables.

3. A method according to one of the preceding claims, **characterised in that** the phase shift is determined between the voltage which prevails at the auxiliary winding or windings (2, 3, 4) connected in front of the main winding (1), and of a further electrical variable at the motor.

4. A method according to claim 3, **characterised in that** the further electrical variable is the current flowing through the main winding (1) of the motor.

5. A method according to claim 3, **characterised in that** the further electrical variable is the voltage prevailing at an auxiliary winding (1) connected parallel to the main winding (1).

6. A method according to claim 3, **characterised in that** the further electrical variable is the voltage prevailing at the main winding (1).

7. A method according to claim 3, **characterised in that** the further electrical variable is the current flowing through the auxiliary winding or the auxiliary windings (2, 3, 4) which is or are connected in series to the main winding (1).

8. A method according to claim 3, **characterised in that** the further electrical variable is the current flowing through the operating capacitor (5).

9. A method according to claim 3, **characterised in that** the further electrical variable is the voltage prevailing at the operating capacitor (5).

10. A method according to one of the preceding claims, **characterised in that** the phase shift between an auxiliary winding (2, 3, 4) connected in parallel with the main winding (1) and the current flowing through the main winding is determined.

11. A method according to one of the preceding claims for an asynchronous motor with several auxiliary windings (2, 3, 4) which may be selectively connected in series or parallel to and with the main winding (1) via electronic switches (T1 to T4), **characterised in that** the control of the electronic switches (T1 to T4) is effected on the basis of the phase position in the main winding (1) detected for determining the phase shift, in a manner such that the switch procedures are only effected in the zero-crossing of the current of the main winding (1).

12. A method according to one of the preceding claims, **characterised in that** for detecting at least one parameter of the load condition of the motor, when all auxiliary windings (2, 3, 4) are connected parallel to the main winding (1) then for short time an auxiliary winding is connected in series with the main winding (1) for the purpose of measuring the phase shift.

13. A method according to claim 12, **characterised in that** the switching duration for measurement purposes is between a half and five periods of the mains frequency.

14. An alternating current asynchronous motor with a main winding (1) with at least one capacitor (5) and with at least one auxiliary winding (2, 3, 4) which may be connected in parallel or in series with the main winding (1) by way of an electronic switch (T1 to T4), wherein a measuring resistance (8) for detecting the current flowing through the main winding (1) is connected in series with the main winding (1), **characterised in that** there is provided a means for detecting the phase shift between at least two electrical variables at the motor, which are load-dependent and changing phase counter to one another over the load spectrum, wherein the measuring resistance (8) forms a part of this means.

15. An alternating current asynchronous motor according to claim 14, **characterised in that** it forms part of a heating circulatory pump unit provided with a centrifugal pump.

## Revendications

1. Procédé pour l'enregistrement d'au moins un paramètre de l'état de charge d'un moteur asynchrone alimenté en courant alternatif avec un enroulement principal (1), avec au moins un enroulement auxiliaire (2, 3, 4) et avec au moins un condensateur (5), dans lequel le paramètre caractérisant l'état de charge est déterminé à l'aide du décalage de phase entre au moins deux grandeurs électriques sur le moteur, **caractérisé en ce que** le paramètre caractérisant l'état de charge est déterminé à l'aide du décalage de phase entre au moins deux grandeurs électriques, dépendant de la charge respectivement dans leur position de phase, sur le moteur, les grandeurs électriques, entre lesquelles le décalage de phase est déterminé, se modifiant réciproquement dans le sens contraire par le spectre de charge dans la phase.

2. Procédé selon la revendication 1, **caractérisé en ce que** le décalage de phase est déterminé par la mesure de temps entre les passages par zéro des grandeurs électriques respectives.

3. Procédé selon l'une des revendications précédentes, **caractérisé en ce que** le décalage de phase entre la tension, qui est appliquée sur l'enroulement auxiliaire ou les enroulements auxiliaires (2, 3, 4) montés en amont de l'enroulement principal (1), et une autre grandeur électrique sur le moteur est déterminé.

4. Procédé selon la revendication 3, **caractérisé en ce que** l'autre grandeur électrique est le courant circulant à travers l'enroulement principal (1) du moteur.

5. Procédé selon la revendication 3, **caractérisé en ce que** l'autre grandeur électrique est la tension s'appliquant sur un enroulement auxiliaire (2, 3, 4) branché en parallèle avec l'enroulement principal (1).

6. Procédé selon la revendication 3, **caractérisé en ce que** l'autre grandeur électrique est la tension s'appliquant sur l'enroulement principal (1).

7. Procédé selon la revendication 3, **caractérisé en ce que** l'autre grandeur électrique est le courant circulant dans l'enroulement auxiliaire ou les enroulements auxiliaires (2, 3, 4) branchés en série avec l'enroulement principal (1).

8. Procédé selon la revendication 3, **caractérisé en ce que** l'autre grandeur électrique est le courant circulant dans le condensateur de service (5).

9. Procédé selon la revendication 3, **caractérisé en ce que** l'autre grandeur électrique est la tension s'appliquant sur le condensateur de service (5).

10. Procédé selon l'une des revendications précédentes, **caractérisé en ce que** le décalage de phase entre un enroulement auxiliaire (2, 3, 4) branché en parallèle avec l'enroulement principal (1) et le courant circulant dans l'enroulement principal est déterminé.

11. Procédé selon l'une des revendications précédentes pour un moteur asynchrone avec plusieurs enroulements auxiliaires (2, 3, 4) qui peuvent être commutés au moyen d'interrupteurs électroniques (T1 à T4) au choix en série ou en parallèle avec l'enroulement principal (1), **caractérisé en ce que**, à l'aide de la position de phase enregistrée pour la détermination du décalage de phase dans l'enroulement principal (1), la commande des interrupteurs électroniques (T1 à T4) s'effectue de telle sorte que des opérations de commutation ne s'effectuent que lors du passage par zéro du courant de l'enroulement principal (1).

12. Procédé selon l'une des revendications précédentes, **caractérisé en ce que**, pour l'enregistrement d'au moins un paramètre de l'état de charge du moteur, dans le cas où tous les enroulements auxiliaires (2, 3, 4) sont branchés en parallèle avec l'enroulement principal (1), un enroulement auxiliaire (2, 3, 4) est branché pendant un court instant en série avec l'enroulement principal (1) dans le but de la mesure du décalage de phase.

13. Procédé selon la revendication 12, **caractérisé en ce que** la durée de commutation pour des tâches de mesure se situe entre une demi-période et cinq périodes de la fréquence du réseau.

14. Moteur asynchrone à courant alternatif avec un enroulement principal (1), avec au moins un condensateur (5) et avec au moins un enroulement auxiliaire (2, 3, 4), qui peut être commuté au moyen d'un interrupteur électronique (D1 à D4) en parallèle ou en série avec l'enroulement principal (1), une résistance de mesure (8) pour l'enregistrement du courant circulant dans l'enroulement principal (1) étant branchée en série avec l'enroulement principal (1), **caractérisé en ce qu'**un appareil est prévu dans le moteur pour l'enregistrement du décalage de phase entre au moins deux grandeurs électriques dépendant de la charge qui se modifient réciproquement dans le sens contraire par le spectre de charge dans la phase, la résistance de mesure (8) formant une partie de cet appareil.

15. Moteur à synchrone à courant alternatif selon la revendication 14, **caractérisé en ce qu'**il fait partie d'un ensemble de pompe de circulation de chauffage pourvu d'une pompe centrifuge.
